# EUROPEAN PATENT SPECIFICATION

(11) **EP 3 025 940 B1**
(45) Date of publication and mention of the grant of the patent: **14.03.2018**
(21) Application number: 15190244.2
(22) Date of filing: 16.10.2015
(51) Int. Cl.: B62D 21/14, B62D 49/06, B60B 35/10

(54) **VARIABLE-TRACK CHASSIS, PARTICULARLY FOR AGRICULTURAL MACHINES AND EQUIPMENT**
CHASSIS MIT VARIABLER SPUR, INSBESONDERE FÜR LANDWIRTSCHAFTLICHE MASCHINEN UND AUSRÜSTUNG
CHÂSSIS À LARGEUR VARIABLE, EN PARTICULIER POUR DES MACHINES AGRICOLES ET ÉQUIPEMENT

(30) Priority: 23.10.2014 IT BO20140587
(43) Date of publication of application: 01.06.2016
(73) Proprietor: BGroup S.p.A., 40026 Imola (IT)
(72) Inventor: BLASI, Vito Luigi, 40026 IMOLA (IT)
(74) Representative: Porsia, Attilio

(56) References cited:
- FR-A- 1 019 459
- FR-A1- 2 265 600
- FR-A1- 2 678 888
- JP-A- S6 064 082

## Description

The invention refers to variable-track chassis with four wheels, all or partly steered and all or partly driven, particularly suitable for agricultural machines and equipment and falling within International Classification B65B35/10.

The current state of the art describes four-wheel variable-track chassis, for example with extendibility of the single axle shafts supporting the wheels, as in prior patent US 3 236 324, or with relative movement of the side members of the chassis, the ends of which support the wheels, as described for example in prior patent EP 501 585. All of the known solutions are constructively complex, consequently entailing high production and maintenance costs and generally only allow quite limited changes in track. French patent FR 2 678 888, filed on 9 July 1991, which describes the chassis for a variable-track gantry tractor, where the engine, driver's cab and the various operational means and accessories of the tractor are positioned within the wheel track and inevitably limit variations thereto, is also cited as state of the art. Another example of a chassis with a variable track is shown in the FR2265600. The object of the invention is to provide a chassis with four wheels, all or partly steerable and with variable track, and all freely rotating or all or partly driven, which is simple to build, has high technological reliability, good load capacity, exceptional solidity and stability and, above all, has the possibility of ample track adjustment, for example from approximately 1800 mm to approximately 3250 mm.

These and other objects have been achieved with a chassis as defined in claim 1 and in the successive dependent claims, based on the following novel idea. The chassis comprises a central frame structure, for example rectangular in plan, with laterally provided side members that, by means of a pair of slides, slide on associated guides supported at the ends by cross members fastened to said central frame, such that said side members can move in parallel from a minimum track position where they are close to the sides of said central frame, to a maximum track position where they are at the maximum distance from the central frame and at the ends of the associated guides. The movement of said side members is obtained by means of actuators, for example of the hydraulic type.

Further characteristics of the invention, and the advantages that derive therefrom, will become clearer from the following description of a preferred embodiment, shown purely by way of non-limited example, in the figures of the three accompanying sheets of drawings, in which:
- Fig. 1 shows the chassis in perspective and substantially dismantled into its various components;
- Figs. 2 and 3 show the chassis in perspective, assembled and in the narrow-track and widest-track operating configurations;
- Figs. 4 and 5 show the same details of the chassis in Figures 2 and 3, transversely sectioned along lines IV-IV and V-V;
- Fig. 6 is a side view of a spraying machine, with the booms in the retracted position, which uses the variable-track chassis referred to in the preceding figures.

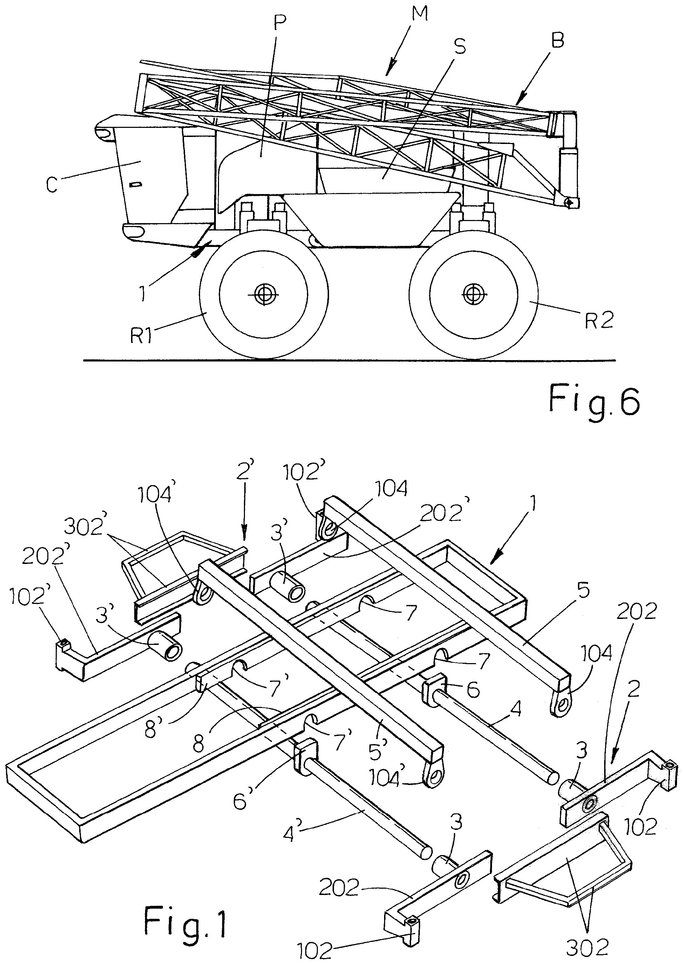

From Figures 1, 2 and 4 it can be noted that the chassis comprises a substantially horizontal and fixed central frame 1, for example rectangular in plan, which is destined for a spraying machine such as that in Figure 6 for example, has a length greater than that between the front wheels R1 and the rear wheels R2 of the machine M and that carries the driver's cab C on the end projecting from the front wheels R1. The group P consisting of the combustion engine, pumps and hydraulic control unit and the tank S for the spraying liquid are mounted on the part of the central frame 1 behind the cab C, with the spraying booms B articulated in a known manner at the rear, which in Figure 6 are shown in the stowed or retracted position, useful for stowage when not used or when the machine travels on the road.

From Figures 1, 2 and 4 it can be noted that the suspensions of wheels R1 and R2 are fixed or are vertically supported in a rotating manner by outwardly protruding end hubs 102 and 102' of composite side members 2 and 2', having a substantially U-shape in plan, open towards the outside and which perpendicularly carry pairs of symmetrically arranged slides on the inner side, for example in the form of axle boxes 3 and 3' sliding on guide rods 4 and 4' as long as or longer than the width of the central frame 1 (see below). The means of steering and driving the wheels R1 and R2 are not considered here as they can be of any known type and because these means are not necessary for understanding the invention, which fundamentally deals with the central frame 1 and the parts associated with it for altering the track between the hubs 102 and 102'.

In the example shown in the drawings, for reasons of low costs and constructional convenience, the side members 2 and 2' are each formed by end pieces 202 and 202' that have the same shape and are ambidextrous and which carry said hubs 102 and 102' and said axle boxes 3 and 3' on opposite ends, and by intermediate pieces 302 and 302' that also have the same shape and are ambidextrous. Always in the example shown, the intermediate pieces 302 and 302' have an isosceles trapezoidal shape that converges towards the outside with oblique sides, to support the movable components of the machine M, but it is understood that any other type of implementation of the side members 2 and 2' falls within the scope of the invention.

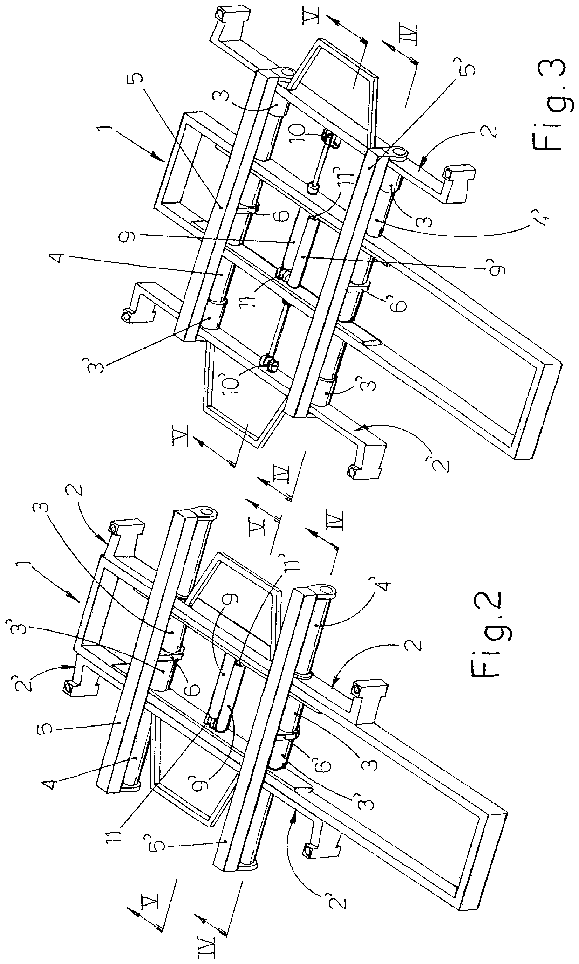

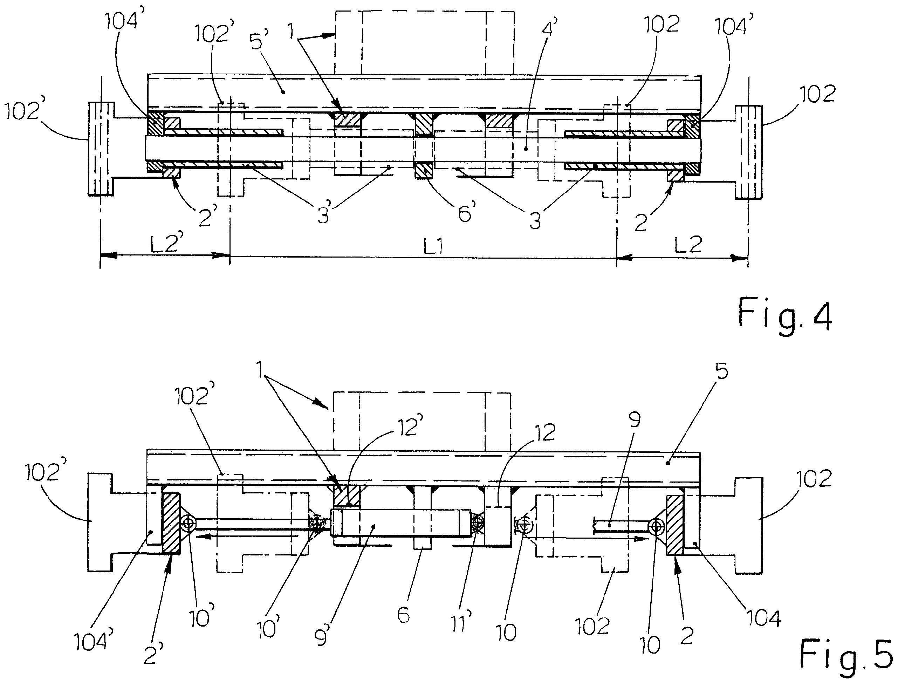

Robust cross members 5 and 5' having substantially the same length as said guides 4 and 4' are fastened on the central frame 1, symmetrically projecting from the sides of central frame 1 and below the ends of which the guides 4 and 4' are fastened with a parallel layout, by means of associated end supports 104 and 104', all so that the side members 2 and 2' have a layout parallel to the sides of the central frame 1 and can slide on the guides 4 and 4' to pass from a position of maximum displacement from them, as in Figure 3 and as shown with unbroken lines in Figures 4 and 5, corresponding to the wide-track configuration of the chassis in question, to a position of maximum proximity to the sides of the central frame 1, as shown in Figure 2 and as shown with broken lines in Figures 4 and 5, corresponding to the narrow-track configuration.

The guides 4 and 4' are preferably also fastened to the associated cross members 5 and 5' via a respective intermediate support 6 and 6' against which the axle boxes 3 and 3' of the side members 2 and 2' can arrive and make contact with when the side members 2 and 2' are in the narrow-track configuration, as in Figure 2. In the example shown in the drawings, the stringers of the central frame 1 are provided with apertures 7 and 7' to allow the passage of the axle boxes 3 and 3' in their travel on the guides 4 and 4' and in this case the use of parts 8 and 8' might be foreseen for stiffening the sections of the central frame 1 provided with said apertures 7 and 7'; these stiffening parts could be fastened to the central frame 1 internally or in another suitable position, as shown in Figures 1, 2 and 3.

It is understood that the solution not shown in drawings, as easily deduced by persons skilled in the art, whereby at least the guides 4 and 4' or even the cross members 5 and 5' are placed beneath the central frame 1, as shown by the broken lines in Figures 3 and 4 and such that the axle boxes 3 and 3' do not interfere with the central frame 1, which in this case might not be provided with said apertures 7 and 7' and said stiffening structures 8 and 8', even if these might still be useful for other purposes described further on, also falls within the scope of the invention.

For the opening or closing movement of the side members 2 and 2', with their passage from the position shown with unbroken lines to that shown with broken lines in Figures 3 and 4 and vice versa, any rectilinear motion actuators useful for the purpose can be used, for example respective double-acting hydraulic jacks 9 and 9', for example side by side as in Figures 2 and 3, placed transversely and inside the fixed central frame 1, connected by the rod to intermediate mounts 10 and 10' fixed to the side members 2 and 2' and articulated with the body on mounts 11 and 11' fixed to the stringers of the central frame 1, which shall be provided with apertures 12 and 12' for the passage of these actuators 9 and 9'. It is obvious that the apertures 12 and 12' will not be necessary if the central frame 1 is positioned above the cross members 5 and 5' as shown with broken lines in Figures 4 and 5, as in this case the mounts 11 and 11' are fastened to stiffening plates integral with the upper central frame 1. To better distribute the stress on the stringers of the central frame 1, the mounts 11 and 11' can be advantageously fastened to the stringers with the interposition of said internal stiffeners 8 and 8'. Furthermore, to avoid the jacks 9 and 9' deforming the central frame 1, the ends of the bodies of these components could be fastened to the opposite stringer to the one that carries the mount 11 and 11' of the jack in question, for example by means of clamps that are not shown and which close the apertures 12 and 12' in Figure 5. In combination with or as an alternative to this solution, cross members (not shown) could be provided in proximity to the jacks 9 and 9' that connect the stringers of the central frame 1 together.

It is understood that the jacks 9 and 9', which could be set up for synchronous movement with current technologies, could be replaced with actuators of any other type with linear and synchronous travel useful for this purpose, without excluding ball screw, pinion and opposed racks or equivalent types of actuator. Where necessary, the movements of the pairs of axle boxes 3 and 3' on the guides 4 and 4' could be synchronized with a respective torsion shaft rotationally supported by each pair of said axle boxes, parallel to the associated side member 2 and 2' and provided at the ends with pinions that mesh with small racks fastened longitudinally on the cross members 5 and 5', all easily implementable by a person skilled in the art.

The constructional simplicity and solidity of the chassis is evident, and it is also evident from Figure 4 how, given L1 as the track width, it is possible to obtain displacements L2 and L2' for widening the track, each longer than a third of L1 in size and how it thus possible to pass from a narrow track of approximately 1800 mm, to a wide track of approximately 3250 mm and to intermediate tracks, with all of the advantages that derive from this ample possibility of adjustment. Due to its small size when in the retracted configuration, as shown in Figure 2, the chassis according to the invention is suitable for being loaded and transported in a 20-foot container and can therefore be transported over long distances at low cost.

It is understood that the description refers to a preferred embodiment of the invention, to which numerous variants and constructional changes may be applied, all without departing from the guiding principle of the invention, as described, illustrated and hereinafter claimed. In the claims, the references specified in parentheses are purely indicative and not limitative regarding the scope of the claims.

## Claims

1. A chassis with variable track, particularly suited to agricultural machinery and equipment with at least four wheels, all or partly steered and all or partly driven, **characterized in that** it comprises a central horizontal frame, rectangular in plan view, which supports the various parts (C, P, S, B) of the agricultural machine (M) and which is provided laterally with side members (2, 2') parallel to the stringers of said frame, having a U-shape in plan, and having end sections that carry outwardly facing mounts or hubs (102, 102') for supporting the suspensions of the wheels (R1, R2) of said machine (M), the longitudinal section of said side members (2, 2') being equipped with at least one pair of slides or axle boxes (3, 3') sliding on associated guide rods (4, 4') supported at the ends by cross members (5, 5') fastened to said central frame (1) and laterally and equally projecting therefrom, with drive means being provided that are connected by one side to said central frame (1) and by the other side to said side members (2, 2') to move these side members (2, 2') from a minimum track position, where they are close to the sides of said central frame (1), to a maximum track position, where they are at the maximum distance from the central frame (1), or to intermediate positions, with a parallel and as far as possible synchronized displacement of the side members (2, 2').

2. The chassis according to claim 1, wherein said side members (2, 2') are each formed by end pieces (202, 202') that have the same shape and are ambidextrous and which carry said mounts or hubs (102, 102') for the suspensions of the wheels and said axle boxes (3, 3') on opposite ends, and by intermediate pieces (302, 302') that also have the same shape and are ambidextrous.

3. The chassis according to claim 2, wherein the central part (302, 302') of the side members (2, 2') has a shape useful for supporting components of the agricultural machine (M) for which the chassis will be destined.

4. The chassis according to claim 1, wherein said cross members (5, 5') are fixed above the central frame (1) and the guides (4, 4') on which said axle boxes (3, 3') slide are positioned at the height of the stringers of the central frame (1) and pass through apertures (7, 7') of these stringers to allow the movement of said axle boxes (3, 3') of the side members (2, 2') through these apertures.

5. The chassis according to claim 1, wherein said cross members (5, 5') are fixed above the central frame (1) and the guides (4, 4') are positioned beneath the central frame (1) so that the sliding axle boxes (3, 3') of the side members (2, 2') do not interfere with the stringers of the central frame (1).

6. The chassis according to claim 1, wherein said cross members (5, 5') are fixed beneath the central frame (1) and the guides (4, 4') are fixed below and parallel to said cross members (5, 5') so that the sliding axle boxes (3, 3') of the side members (2, 2') do not interfere with the stringers of the central frame (1).

7. The chassis according to one or more of the preceding claims, wherein the displacement means of the side members (2, 2') comprise
linear actuators, such as opposing double-action hydraulic jacks (9, 9') side by side, parallel to said guides (4, 4') and having a substantially symmetrical layout with respect to said guides, these jacks (9, 9') being anchored by the rod to mounts (10, 10') fixed to the side members (2, 2') and with the body being anchored to mounts (11, 11') fixed to the stringers of the central frame (1) or to stiffening parts fixed to these stringers, these stringers and these stiffening parts being provided with apertures (12, 12') for the passage of the body of said jacks (9, 9').

8. The chassis according to claim 7, wherein said apertures (12, 12') can be closed by clamps that fasten the body of the jacks (9, 9') into the apertures to ensure that the reaction stress deriving from the displacement of the side members (2, 2') acts on both stringers of the central frame (1), which for this purpose could in turn be provided with stiffening bars positioned parallel to and in proximity to the body of said jacks (9, 9').

9. The chassis according to claims 7 and/or 8, which comprises longitudinal stiffening structures (8, 8') to be fixed on the stringers of the central frame (1) to strengthen it at said possible apertures (7, 7', 12, 12') and at the mounts (11, 11') of the body of the jacks (9, 9') for the displacement of the side members (2, 2').

10. The chassis according to one or more of the preceding claims, which comprises means for synchronizing the displacement of the axle boxes (3 and 3') on the associated guide rods (4, 4'), via a respective torsion shaft rotationally supported by each pair of said axle boxes (3, 3'), parallel to the associated side member (2, 2') and provided at the ends with pinions that mesh with small racks fastened longitudinally on the cross members (5, 5')

## Patentansprüche

1. Ein Chassis mit variabler Spur, insbesondere für landwirtschaftliche Maschinen und Ausrüstung, mit mindestens vier Rädern, welche allesamt oder teilweise gesteuert und allesamt oder teilweise angetrieben werden, **dadurch gekennzeichnet, dass** es einen zentralen horizontalen Rahmen umfasst, welcher bei Draufsicht rechteckig ist und die einzelnen Teile (C, P, S, B) der landwirtschaftlichen Maschine (M) trägt und seitlich mit Seitenelementen (2, 2') ausgerüstet ist, die parallel zu den Längsversteifungen des genannten Rahmen verlaufen, welche bei der Draufsicht eine U-Form sowie Endabschnitte aufweisen, die nach außen hin Halterungen oder Buchsen (102, 102') zur Lagerung der Aufhängung der Räder (R1, R2) der genannten Maschine (M) tragen, wobei die Längsschnitte der genannten Seitenelemente (2, 2') jeweils mit mindestens einem Paar Gleitschienen oder Achslager (3, 3') ausgerüstet sind, welche über entsprechende Führungsstangen (4, 4') gleiten, die an den Enden jeweils von Querträgern (5, 5') gehalten werden, die an dem genannten zentralen Rahmen (1) befestigt sind und seitlich und gleicherweise darüber hinausragen, wobei Antriebselemente vorgesehen sind, welche mit einer Seite jeweils mit dem genannten zentralen Rahmen (1) und mit der anderen Seite mit den genannten Seitenelementen (2, 2') verbunden sind, um diese Seitenelemente (2, 2') von einer Mindestspurlage, bei der sie sich nahe an den Seiten des genannten zentralen Rahmens (1) befinden, zu einer maximalen Spurlage zu bewegen, bei der sie sich in der größten Entfernung von dem zentralen Rahmen (1) befinden, beziehungsweise zu Zwischenstellungen, und zwar jeweils bei einer parallelen und soweit wie möglich synchronisierten Verschiebung der Seitenelemente (2, 2').

2. Das Chassis gemäß Anspruch 1, wobei die genannten Seitenelemente (2, 2') jeweils durch Endstücke (202, 202') gebildet werden, welche die gleiche Form aufweisen und beidseitig funktionieren und die die genannten Halterungen und Buchsen (102, 102') für die Aufhängung der Räder tragen und die genannten Achslager (3, 3') an den entgegengesetzten Enden, sowie durch Zwischenstücke (302, 302'), welche ebenfalls die gleiche Form aufweisen und beidseitig funktionieren.

3. Das Chassis gemäß Anspruch 2, wobei der mittlere Teil (302, 302') der Seitenelemente (2, 2') eine Form aufweist, welche nützlich für die Halterung von Komponenten der landwirtschaftlichen Maschine (M) ist, für die das Chassis bestimmt ist.

4. Das Chassis gemäß Anspruch 1, wobei die genannten Querträger (5, 5') oberhalb des zentralen Rahmens (1) befestigt sind und die Führungen (4, 4') über die die genannten Achslager (3, 3') gleiten, auf der Höhe der Längsversteifungen des zentralen Rahmens (1) angeordnet sind und durch entsprechende Öffnungen (7, 7') dieser Längsversteifungen hindurch laufen, um die Bewegung der genannten Achslager (3, 3') der Seitenelemente (2, 2') durch diese Öffnungen zu ermöglichen.

5. Das Chassis gemäß Anspruch 1, wobei die genannten Querträger (5, 5') oberhalb des zentralen Rahmens (1) befestigt sind und die Führungen (4, 4') unterhalb des zentralen Rahmens (1) angeordnet sind, so dass die gleitenden Achslager (3, 3') der Seitenelemente (2, 2') nicht mit den Längsversteifungen des zentralen Rahmens (1) interferieren.

6. Das Chassis gemäß Anspruch 1, wobei die genannten Querträger (5, 5') jeweils unterhalb des zentralen Rahmens (1) befestigt sind und die Führungen (4, 4') unter und parallel zu den genannten Querträgern (5, 5') befestigt sind, so dass die gleitenden Achslager (3, 3') der Seitenelemente (2, 2') nicht mit den Längsversteifungen des zentralen Rahmens (1) interferieren.

7. Das Chassis gemäß einem oder mehreren der vorausgegangenen Ansprüche, wobei die Verstellungsmittel der Seitenelemente (2, 2') lineare Stellantriebe wie gegenüberliegende, doppelbewegliche Hydraulikheber (9, 9') umfassen, die jeweils Seite an Seite und parallel zu den genannten Führungen (4, 4') liegen und einen im wesentlichen symmetrischen Aufbau in Bezug auf die genannten Führungen aufweisen, wobei die genannten Heber (9, 9') durch die Stange an entsprechenden Halterungen (10, 10') verankert sind, welche wiederum an den Seitenelementen (2, 2') befestigt sind, und wobei der Körper an Halterungen (11, 11') verankert ist, welche jeweils an den Längsversteifungen des zentralen Rahmens (1) beziehungsweise an Versteifungselementen befestigt sind, die wiederum jeweils an diesen Längsversteifungen befestigt sind, wobei diese Längsversteifungen und diese Versteifungselemente jeweils mit entsprechenden Öffnungen (12, 12') für den Durchgang des Körpers der genannten Heber (9, 9') ausgerüstet sind.

8. Das Chassis gemäß Anspruch 7, wobei die genannten Öffnungen (12, 12') durch entsprechende Klemmen geschlossen werden können, welche den Körper der Heber (9, 9') jeweils in den Öffnungen befestigen, um sicherzustellen, dass die Rückkopplungsbelastung, die sich aus der Verschiebung der Seitenelemente (2, 2') ergibt, jeweils auf die beiden Längsversteifungen des zentralen Rahmens (1) einwirkt, welche zu diesem Zweck wiederum mit Versteifungsstangen ausgerüstet werden könnten, die jeweils parallel zu und in der Nähe des Körpers der genannten Heber (9, 9') angeordnet sind.

9. Das Chassis gemäß den Ansprüchen 7 und/oder 8, das Längsversteifungsstrukturen (8, 8') umfasst, welche jeweils an den Längsversteifungen des zentralen Rahmens (1) befestigt werden müssen, um sie an den genannten möglichen Öffnungen (7, 7', 12, 12') und an den Halterungen (11, 11') des Körpers der Heber (9, 9') zwecks Verschiebung der Seitenelemente (2, 2') zu verstärken.

10. Das Chassis gemäß einem oder mehreren der vorausgegangenen Ansprüche, das entsprechende Elemente zur Synchronisierung der Verschiebung der Achslager (3, 3') auf den damit verbundenen Führungsstangen (4, 4') umfasst, und zwar mittels einer entsprechenden Torsionswelle, welche drehbar durch jedes Paar der genannten Achslager (3, 3') gelagert wird, und zwar parallel zu den dazu gehörigen Seitenelementen (2, 2') und an den Enden ausgerüstet mit entsprechenden Getrieberädern, welche sich jeweils mit kleinen Zahnstangen verzahnen, die längs an den Querelementen (5, 5') befestigt sind.

## Revendications

1. Châssis à largeur variable, adapté en particulier pour des machines et équipement agricoles avec au moins quatre roues, toutes ou en partie directrices et toutes ou en partie motrices, **caractérisé en ce qu'**il comprend un châssis horizontal central, rectangulaire dans une vue en plan, qui supporte les différentes parties (C, P, S, B) de la machine agricole (M) et qui est muni latéralement d'éléments latéraux (2, 2') parallèles aux longerons dudit châssis, ayant un profil en U en plan, et ayant des sections d'extrémité qui portent des supports ou moyeux orientés vers l'extérieur (102, 102') pour supporter les suspensions des roues (R1, R2) de ladite machine (M), la section longitudinale desdits éléments latéraux (2, 2') étant équipée d'au moins une paire de coulisseaux ou boîtes d'essieu (3, 3') coulissant sur des tiges de guidage associées (4, 4') supportées aux extrémités par des traverses (5, 5') fixées audit châssis central (1) et faisant saillie latéralement et de manière identique à partir de celui-ci, avec des moyens d'entraînement prévus qui sont connectés par un côté audit châssis central (1) et par l'autre côté auxdits éléments latéraux (2, 2') pour déplacer ces éléments latéraux (2, 2') d'une position de largeur minimale, dans laquelle ils sont proches des côtés dudit châssis central (1), à une position de largeur maximale, dans laquelle ils sont à la distance maximale par rapport au châssis central (1), ou dans des positions intermédiaires, avec un déplacement parallèle et autant que possible synchronisé des éléments latéraux (2, 2').

2. Châssis selon la revendication 1, dans lequel lesdits éléments latéraux (2, 2') sont formés chacun par des pièces d'extrémité (202, 202') qui ont le même profil et sont ambidextres et qui portent lesdits supports ou moyeux (102, 102') pour les suspensions des roues et lesdites boîtes d'essieu (3, 3') sur des extrémités opposées, et par des pièces intermédiaires (302, 302') qui ont également le même profil et sont ambidextres.

3. Châssis selon la revendication 2, dans lequel la partie centrale (302, 302') des éléments latéraux (2, 2') a un profil utile pour supporter des composants de la machine agricole (M) à laquelle le châssis sera destiné.

4. Châssis selon la revendication 1, dans lequel lesdites traverses (5, 5') sont fixées au-dessus du châssis central (1) et les guides (4, 4') sur lesquels lesdites boîtes d'essieu (3, 3') coulissent sont positionnés à la hauteur des longerons du châssis central (1) et passent à travers des ouvertures passantes (7, 7') de ces longerons pour permettre le mouvement desdites boîtes d'essieu (3, 3') des éléments latéraux (2, 2') à travers ces ouvertures.

5. Châssis selon la revendication 1, dans lequel lesdites traverses (5, 5') sont fixées au-dessus du châssis central (1) et les guides (4, 4') sont positionnés au-dessous du châssis central (1) de manière que les boîtes d'essieu coulissantes (3, 3') des éléments latéraux (2, 2') n'interfèrent pas avec les longerons du châssis central (1).

6. Châssis selon la revendication 1, dans lequel lesdites traverses (5, 5') sont fixées au-dessous du châssis central (1) et les guides (4, 4') sont fixés au-dessous et parallèles auxdites traverses (5, 5') de manière que les boîtes d'essieu coulissantes (3, 3') des éléments latéraux (2, 2') n'interfèrent pas avec les longerons du châssis central (1).

7. Châssis selon une ou plusieurs des revendications précédentes, dans lequel les moyens de déplacement des éléments latéraux (2, 2') comprennent des actionneurs linéaires, de manière que des vérins hydrauliques à double effet opposés (9, 9') côte à côte, parallèles auxdits guides (4, 4') et ayant une disposition sensiblement symétrique par rapport auxdits guides, ces vérins (9, 9') étant ancrés par les tiges à des supports (10, 10') fixés aux éléments latéraux (2, 2') et avec le corps qui est ancré à des supports (11, 11') fixés aux longerons du châssis central (1) ou à des parties de raidissement fixées à ces longerons, ces longerons et ces parties de raidissement étant pourvus d'ouvertures (12, 12') pour le passage du corps desdits vérins (9, 9').

8. Châssis selon la revendication 7, dans lequel lesdites ouvertures (12, 12') peuvent être fermées par des éléments de serrage qui fixent le corps des vérins (9, 9') dans les ouvertures pour garantir que la contrainte de réaction dérivant du déplacement des éléments latéraux (2, 2') agisse sur les deux longerons du châssis central (1), qui, à ces fins, pourrait être équipé à son tour de barres de raidissement positionnées parallèles au et à proximité du corps desdits vérins (9, 9').

9. Châssis selon la revendication 7 et/ou 8, qui comprend des structures de raidissement longitudinales (8, 8') destinées à être fixées aux longerons du châssis central (1) pour le renforcer au niveau desdites éventuelles ouvertures (7, 7', 12, 12') et au niveau des supports (11, 11') du corps des vérins (9, 9') pour le déplacement des éléments latéraux (2, 2').

10. Châssis selon une ou plusieurs des revendications précédentes, qui comprend des moyens pour synchroniser le déplacement des boîtes d'essieu (3 et 3') sur les tiges de guidage associées (4, 4'), par l'intermédiaire d'un arbre de torsion respectif supporté de manière rotative par chaque paire desdites boîtes d'essieu (3, 3'), parallèles à l'élément latéral associé (2, 2') et muni aux extrémités de pignons qui s'engrènent avec de petites crémaillères fixées longitudinalement sur les traverses (5, 5').
